# EUROPÄISCHE PATENTANMELDUNG

(11) **EP 4 664 146 A1**
(43) Veröffentlichungstag der Anmeldung: **17.12.2025**
(21) Anmeldenummer: 25179926.8
(22) Anmeldetag: 30.05.2025
(51) Int. Cl.: G01S 7/48, G01S 7/497, G01S 17/86, G01S 17/87, G01S 17/931

(54) **VERFAHREN ZUR VALIDIERUNG EINER KALIBRIERUNG MEHRERER UMGEBUNGSSENSOREN UND SYSTEM ZUR VALIDIERUNG EINER KALIBRIERUNG MEHRERER UMGEBUNGSSENSOREN**

(30) Priorität: 11.06.2024 DE 102024116260
(71) Anmelder: MAN Truck & Bus SE, 80995 München (DE)
(72) Erfinder: Perl, Andrea, 80995 München (DE); Gebauer, Oliver, 80995 München (DE); Yan, Min, 80995 München (DE)

(57) **Zusammenfassung**

Die Erfindung betrifft ein Verfahren zur Validierung einer Kalibrierung mehrerer Umgebungssensoren (12a-b) und ein System 100 zur Validierung einer Kalibrierung mehrerer Umgebungssensoren (12a-b). Das Verfahren umfasst ein Bereitstellen einer Referenzumgebung (20), vorzugsweise umfassend ein Referenzobjekt (20a), in einer zumindest abschnittsweise mittels der mehreren Umgebungssensoren (12a-b) erfassbaren Umgebung (100), ein Bereitstellen des Fahrzeugs (10), wobei das Fahrzeug (10) die mehreren Umgebungssensoren (12a-b) und eine Lokalisierungseinrichtung (14) zum Erfassen einer Fahrzeugposition aufweist, ein Bereitstellen einer Rechnereinrichtung (16), wobei auf der Rechnereinrichtung (16) ein Referenzumgebung-Datensatz, vorzugsweise eine Referenzumgebung-Punktewolke, gespeichert ist, der die Referenzumgebung (20) charakterisiert, ein Erfassen der Fahrzeugposition mittels der Lokalisierungseinrichtung (14), vorzugsweise wobei die Fahrzeugposition auf ein globales Koordinatensystem der Umgebung (100) bezogen ist, ein gleichzeitiges Erfassen der Referenzumgebung (20) mittels der mehreren Umgebungssensoren (12a-b), wobei Sensor-Rohdatensätze, die die Referenzumgebung (20) charakterisieren, erstellt werden, vorzugsweise die auf ein Sensor-Koordinatensystem des jeweiligen Umgebungssensors (12a-b) bezogen sind, ein Ableiten einer Lokalisierungs-Transformationsvorschrift, vorzugsweise einer Lokalisierung-Transformationsmatrix, mittels der Rechnereinrichtung (16), basierend auf der erfassten Fahrzeugposition, dem Referenzumgebung-Datensatz und den Sensor-Rohdatensätzen; und ein Ableiten einer Kalibrier-Transformationsvorschrift, vorzugsweise einer Kalibrier-Transformationsmatrix, mittels der Rechnereinrichtung (16), basierend auf dem Referenzumgebung-Datensatz, den Sensor-Rohdatensätzen und der Lokalisierungs-Transformationsvorschrift.

## Beschreibung

Die Erfindung betrifft ein Verfahren zur Validierung einer Kalibrierung mehrerer Umgebungssensoren und ein System zur Validierung einer Kalibrierung mehrerer Umgebungssensoren.

In der Praxis erfolgt die Validierung der Kalibrierung von Umgebungssensoren (z. B. Lidarsensoren) manuell und/oder auf rein visueller Basis. Dabei werden z. B. die Aufnahmen der Lidarpunktwolken der einzelnen Lidarsensoren mit einem Programm visualisiert. Bei einer Abweichung der einzelnen Punktwolken werden die Transformationsmatrizen der Lidarsensoren zum Fahrzeugkoordinaten manuell so angepasst, dass eine größere Überlappung erreicht wird.

Dies birgt mehrere Nachteile. Beispielsweise ist diese Technik fehleranfällig und mit hohem zeitlichem Aufwand verbunden. Ferner ist das Ergebnis stark subjektiv bzw. hängt z. B. stark von den Fähigkeiten der die Validierung durchführenden Person ab.

Daher ist es Aufgabe der Erfindung, eine insbesondere verbesserte und/oder alternative Technik zur Validierung einer Kalibrierung mehrerer Umgebungssensoren bereitzustellen. Insbesondere ist es z. B. eine Aufgabe der Erfindung, eine zuverlässigere, objektivere und genauere Technik bereitzustellen.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten Aspekt wird ein Verfahren zur Validierung einer (z. B. bereits vorhandenen und/oder initialen) Kalibrierung mehrerer Umgebungssensoren (vorzugsweise und/oder zur Kalibrierung mehrerer Umgebungssensoren) eines Fahrzeugs bereitgestellt. Die Umgebungssensoren können sich also z. B. von dem Fahrzeug umfasst sein und/oder sich an dem Fahrzeug befinden.

Das Verfahren umfasst ein Bereitstellen einer Referenzumgebung (optional: umfassend ein oder bestehend aus einem Referenzobjekt), in einer zumindest abschnittsweise mittels der mehreren Umgebungssensoren erfassbaren Umgebung.

Das Verfahren umfasst ferner ein Bereitstellen des Fahrzeugs. Das Fahrzeug umfasst die mehreren Umgebungssensoren und eine Lokalisierungseinrichtung zum Erfassen einer Fahrzeugposition.

Das Verfahren umfasst ferner ein Bereitstellen einer Rechnereinrichtung, wobei auf der Rechnereinrichtung ein Referenzumgebung-Datensatz (z. B. eine Referenzumgebung-Punktewolke) gespeichert ist, der die Referenzumgebung (z. B. das Referenzobjekt) charakterisiert.

Das Verfahren umfasst ferner ein Erfassen der Fahrzeugposition mittels der Lokalisierungseinrichtung. Optional kann die Fahrzeugposition auf ein globales Koordinatensystem (z. B. auf ein Weltkoordinatensystem) der Umgebung bezogen sein.

Das Verfahren umfasst ferner ein gleichzeitiges (z. B. zu einem identischen Zeitpunkt durchgeführtes und/oder simultanes und/oder zeitgleiches) Erfassen der Referenzumgebung (optional: des Referenzobjekts) mittels der mehreren Umgebungssensoren, wobei Sensor-Rohdatensätze, die die Referenzumgebung (z. B. das Referenzobjekt) charakterisieren, erstellt werden. Optional sind die Sensor-Rohdatensätze auf ein Sensor-Koordinatensystem des jeweiligen Umgebungssensors bezogen.

Das Verfahren umfasst ferner ein Ableiten einer Lokalisierungs-Transformationsvorschrift (z. B. einer Lokalisierung-Transformationsmatrix) mittels der Rechnereinrichtung, basierend auf der erfassten Fahrzeugposition, dem Referenzumgebung-Datensatz und den Sensor-Rohdatensätzen.

Das Verfahren umfasst ferner ein Ableiten einer Kalibrier-Transformationsvorschrift (z. B. einer Kalibrier-Transformationsmatrix) mittels der Rechnereinrichtung, basierend auf dem Referenzumgebung-Datensatz, den Sensor-Rohdatensätzen und der Lokalisierungs-Transformationsvorschrift.

Ein Vorteil kann z. B. darin liegen, dass auf zuverlässige, objektive und wiederholbare Weise eine Dekalibrierung der mehreren Umgebungssensoren feststellbar ist. In vorteilhafter Weise können die Ergebnisse anschließend z. B. zur Bestimmung der Güte oder zur Verbesserung der ursprünglichen Kalibriermethode verwendet werden ("Rekalibrierung").

Ferner kann die Technik z. B. Transformationsmatrizen liefern, die zur Evaluierung und zur Verbesserung des Ergebnisses der initialen Kalibrierung verwendet werden können. Ferner kann eine Bewertung pro Sensor erfolgen, sodass eine Bewertung aller Freiheitsgrade aller Umgebungssensoren (z. B. Lidarsensoren) erfolgen kann. Dadurch kann z. B. ebenfalls eine Rekalibrierung des initialen Kalibrierergebnisses ermöglicht werden.

Bevorzugt wird der Referenzumgebung-Datensatz als hochgenauer Referenzumgebung-Datensatz bereitgestellt (z. B. indem der Referenzumgebung-Datensatz eine mindestens gleichwertige oder eine höhere Genauigkeit und/oder Präzision und/oder Richtigkeit aufweist als der genaueste und/oder präziseste und/oder richtigste Umgebungssensor unter den mehreren Umgebungssensoren). Beispielsweise ist denkbar, dass der Referenzumgebung-Datensatz genauer und/oder hochgenau eingemessen wurde.

Die mehreren Umgebungssensoren können z. B. mindestens einen Lidarsensor und/oder mindestens einen Radarsensor und/oder mindestens eine Kamera umfassen.

Um die Lokalisierungs-Transformationsvorschrift und/oder die Kalibrier-Transformationsvorschrift ableiten zu können, können Algorithmen verwendet werden. Denkbare Algorithmen, die im hierin offenbarten Verfahren zum Einsatz kommen können, sind im Grunde alle Punktwolken-Registrierung-Algorithmen, die zwei Punktwolken ausrichten und mit Ausreißern (Outlier) umgehen können, z.B. Beispiel ein "iterative-closest-point-Algorithmus" oder Algorithmen des maschinellen Lernens.

Gemäß einem Ausführungsbeispiel kann der Schritt des Ableitens einer Lokalisierungs-Transformationsvorschrift ein Fusionieren der Sensor-Rohdatensätze zu einem fusionierten Sensor-Rohdatensatz mittels der Rechnereinrichtung umfassen, wobei die Rechnereinrichtung die Sensor-Rohdatensätze zu einem fusionierten Sensor-Rohdatensatz zusammenfasst. Beispielsweise kann das Ableiten einer Lokalisierungs-Transformationsvorschrift ein indirektes Lokalisieren über die erfasste Fahrzeugposition umfassen. Dadurch kann vorteilhaft ein Lokalisierungsfehler (z. B ein örtlicher Versatz und/oder eine fehlerhafte Ausrichtung) der erfassten Sensor-Rohdatensätze kompensierbar sein.

Gemäß einem Ausführungsbeispiel kann der Schritt des Ableitens der Lokalisierungs-Transformationsvorschrift ferner ein Transformieren des Referenzumgebung-Datensatzes mittels der Rechnereinrichtung umfassen, wobei optional die Rechnereinrichtung den Referenzumgebung-Datensatz aus dem globalen Koordinatensystem in ein Fahrzeug-Koordinatensystem transformiert.

Alternativ oder ergänzend kann der Schritt des Ableitens der Lokalisierungs-Transformationsvorschrift ein Angleichen des fusionierten Sensor-Rohdatensatzes und des Referenzumgebung-Datensatzes zu einem angeglichenen Datensatz mittels der Rechnereinrichtung umfassen, wobei die Rechnereinrichtung den fusionierten Sensor-Rohdatensatz und den Referenzumgebung-Datensatz zum Kompensieren von Lokalisierungsfehlern (z. B. des Fahrzeuges in der Referenzumgebung) einander anpasst (z. B. mittels eines iterative-closest-point-Algorithmus und/oder mittels maschinellen Lernens). Dadurch kann vorteilhaft ein Lokalisierungsfehler (z. B ein örtlicher Versatz und/oder eine fehlerhafte Ausrichtung) der Lokalisierungseinrichtung kompensierbar sein.

Gemäß einem Ausführungsbeispiel kann der Schritt des Ableitens der Kalibrier-Transformationsvorschrift ein Transformieren der Sensor-Rohdatensätze mittels der Lokalisierungs-Transformationsvorschrift umfassen. Optional kann die Rechnereinrichtung die Sensor-Rohdatensätze aus einem jeweiligen Sensor-Koordinatensystem in ein Fahrzeug-Koordinatensystem transformieren.

Alternativ oder ergänzend kann der Schritt des Ableitens der Kalibrier-Transformationsvorschrift ein Transformieren des Referenzumgebung-Datensatzes mittels der Lokalisierungs-Transformationsvorschrift umfassen. Optional kann die Rechnereinrichtung den Referenzumgebung-Datensatz aus dem globalen Koordinatensystem in ein Fahrzeug-Koordinatensystem transformieren.

Gemäß einem Ausführungsbeispiel kann das Verfahren ein Bereitstellen einer initialen Kalibrier-Transformationsvorschrift umfassen. Die initiale Kalibriervorschrift kann z. B. eine bereits vorhandene und/oder zuvor mit einem anderen Verfahren zum Fahrzeug ermittelte Kalibriervorschrift umfassen. Es ist aber auch denkbar, dass die initiale Kalibriervorschrift eine Kalibriervorschrift umfasst, die beim n-ten iterativen Durchlauf der Schritte des Ableitens der Lokalisierungs-Transformationsvorschrift und des Ableitens der Kalibrier-Transformationsvorschrift wie hierin offenbart, erhalten wurde. Die initiale Kalibrier-Transformationsvorschrift kann eine Transformation aus einem jeweiligen Sensor-Koordinatensystem in ein Fahrzeug-Koordinatensystem und/oder ein gemeinsames Koordinatensystem der Umgebungssensoren angeben, wobei das Ableiten der Lokalisierungs-Transformationsvorschrift umfasst, dass die Rechnereinrichtung die Sensor-Rohdatensätze mittels der initialen Kalibrier-Transformationsvorschrift in das Fahrzeug-Koordinatensystem und/oder das gemeinsame Koordinatensystem der Umgebungssensoren transformiert. Dadurch kann sich z. B. eine gegenüber der initialen Kalibrierung verbesserte Kalibrierung ergeben.

Gemäß einem Ausführungsbeispiel kann die Lokalisierungs-Transformationsvorschrift eine Transformation aus einem globalen Koordinatensystem in ein Fahrzeug-Koordinatensystem angeben und/oder die Kalibrier-Transformationsvorschrift eine Transformation aus einem jeweiligen Sensor-Koordinatensystem in ein Fahrzeug-Koordinatensystem angeben.

Gemäß einem Ausführungsbeispiel kann das Verfahren ein Ableiten eines Kalibriergüte-Maßes mittels der Rechnereinrichtung basierend auf der Kalibrier-Transformationsvorschrift aufweisen (z. B. mittels eines root-mean-square-Algorithmus und/oder mittels maschinellen Lernens). Das Kalibriergüte-Maß kann vorteilhaft z. B. eine automatische und/oder händische Überprüfung des Kalibrierergebnisses ermöglichen.

Gemäß einem Ausführungsbeispiel kann das Verfahren ein Kalibrieren der mehreren Umgebungssensoren mittels der Rechnereinrichtung aufweisen (z. B. wenn das Kalibriergüte-Maß außerhalb eines vorbestimmten Bereichs liegt). Beispielsweise kann ein Kalibrieren von extrinsischen Parametern der Umgebungssensoren vorgenommen werden. Denkbar ist, dass das Verfahren zur Validierung der Kalibrierung also zu einem Verfahren zur Kalibrierung der mehreren Umgebungssensoren erweitert wird.

Gemäß einem Ausführungsbeispiel kann die Rechnereinrichtung die Schritte des Ableitens des Lokalisierungs-Transformationsvorschrift und des Ableitens der Kalibrier-Transformationsvorschrift, und optional des Ableitens des Kalibriergüte-Maßes und/oder des Kalibrierens der mehreren Umgebungssensoren, iterativ durchführen (z. B. solange bis das Kalibriergüte-Maß innerhalb des vorbestimmten Bereichs liegt). Beispielsweise können die Schritte des Ableitens des Lokalisierungs-Transformationsvorschrift und des Ableitens der Kalibrier-Transformationsvorschrift, und optional des Ableitens des Kalibriergüte-Maßes und/oder des Kalibrierens der mehreren Umgebungssensoren, schleifenartig durchlaufen werden. Mit jeder feineren Kalibrierung kann auch ein feineres Lokalisierungsergebnis erwartet werden. Das Gesamtergebnis kann somit kontinuierlich verbesserbar sein.

Gemäß einem Ausführungsbeispiel kann der in der Rechnereinrichtung bereitgestellte Referenzumgebung-Datensatz eine Genauigkeit (z. B. eine Richtigkeit und/oder eine Präzision) aufweisen, die mindestens so hoch ist wie und/oder höher ist als eine Rohdatensatz-Messgenauigkeit (z. B. eine Rohdatensatz-Richtigkeit und/oder eine Rohdatensatz-Präzision) jedes Sensor-Rohdatensatzes der mittels der mehreren Umgebungssensoren erfassten Sensor-Rohdatensätze. Der Begriff der Richtigkeit kann z. B. angeben, inwieweit die Datensätze der Wirklichkeit entsprechen. Die Richtigkeit kann z. B. eine systematische Messabweichung angeben. Der Begriff der Präzision kann z. B. angeben, inwieweit die Datensätze in sich konsistent sind und/oder in sich übereinstimmende Daten umfassen. Die Präzision kann z. B. eine Standardabweichung pro Datensatz angeben. Eine Genauigkeit kann z. B. angeben, dass ein Datensatz sowohl richtig als auch präzise ist (z. B. indem es sowohl eine kleine(re) systematische Messabweichung als auch eine kleine(re) Standardabweichung aufweist). Es ist grundsätzlich aber auch denkbar, dass eine höhere Genauigkeit z. B. eine größere Anzahl an Datenpunkten innerhalb eines Datensatzes (z. B. höhere Auflösung) angibt.

Exemplarisch kann eine schwache Richtigkeit z. B. zu bleibenden Abweichungen in dem finalen Ergebnis führen, während eine schwache Präzision dazu führen kann, dass die Lösung innerhalb eines Rauschbandes wandern kann.

Gemäß einem Ausführungsbeispiel kann der in der Rechnereinrichtung bereitgestellte Referenzumgebung-Datensatz vorbekannt sein und/oder vorgespeichert sein (z. B. auf der Rechnereinrichtung abgelegt) und/oder an die Rechnereinrichtung übermittelt werden und/oder nicht mittels der mehreren Umgebungssensoren erfasst wurde.

Alternativ oder ergänzend kann der in der Rechnereinrichtung bereitgestellte Referenzumgebung-Datensatz messtechnisch erstellt sein (z. B. mittels Lidar-Sensorik, Photogrammetrie und/oder projektiven Verfahren).

Alternativ oder ergänzend kann der in der Rechnereinrichtung bereitgestellte Referenzumgebung-Datensatz eine analytische (z. B. formelmäßige) Beschreibung der Referenzumgebung (z. B. des Referenzobjekts) umfassen.

Der Referenzumgebung-Datensatz kann auf unterschiedlichste Art gewonnen werden, z. B. durch andere (Lidar-)Sensorik, Photogrammetrie, Projektive Verfahren etc.. Der Referenzumgebung-Datensatz kann aber auch händisch (mit einem Maßband) eingemessen werden, sofern die Referenzumgebung in Abschnitte eingeteilt werden kann, die sinnvoll mit geometrischen Elementen beschrieben werden können.

Gemäß einem Ausführungsbeispiel kann das gleichzeitige Erfassen der Referenzumgebung (z. B. des Referenzobjekts) umfassen, dass die Referenzumgebung (z. B. das Referenzobjekt) mittels der mehreren Umgebungssensoren zu einem identischen und/oder selben und/oder einzigen Zeitpunkt erfasst wird.

Alternativ oder ergänzend kann das gleichzeitige Erfassen der Referenzumgebung umfassen, dass die Referenzumgebung von den Umgebungssensoren zu mehreren Zeitpunkten (z. B. jeweils pro Zeitpunkt gleichzeitig) erfasst wird. Es ist denkbar, dass die Sensor-Rohdatensätze aller Umgebungssensoren (z. B. mittels einer hochgenauen Odometrieschätzung) einander angeglichen werden.

Tatsächlich kann es vorteilhaft sein, die Referenzumgebung in mehreren Zeitschritten zu erfassen (bspw. während das Fahrzeug durch die Referenzumgebung fährt). Dann können sich grundsätzlich zwei Möglichkeiten der Umsetzung ergeben: Das Verfahren kann z. B. pro Zeitschritt ausgeführt werden und die Ergebnisse aller Zeitschritte zur Steigerung der Robustheit anschließend zusammengefasst werden. Alternativ können z. B. über eine hochgenaue Odometrieschätzung alle Punkwolken aller Sensoren aller Zeitschritte fusioniert und anschließend mit der Referenzumgebung verglichen werden.

Gemäß einem Ausführungsbeispiel kann das Bereitstellen des Fahrzeugs ein Einfahren des Fahrzeugs in die Umgebung umfassen.

Alternativ oder ergänzend kann das Erfassen der Referenzumgebung (z. B. des Referenzobjekts) mittels der mehreren Umgebungssensoren in einem Fahrzeugstillstand oder während einer Fahrzeugbewegung durchgeführt werden.

Alternativ oder ergänzend kann die Referenzumgebung (z. B. das Referenzobjekt) Abschnitte (z. B. planare Abschnitte) aufweisen, die in drei unterschiedliche Raumrichtungen orientiert sind.

Alternativ oder ergänzend können die mehreren Umgebungssensoren Lidar-Sensoren umfassen. Beispielsweise können alle Umgebungssensoren der mehreren Umgebungssensoren Lidar-Sensoren sein. Es ist aber auch denkbar, dass die mehreren Umgebungssensoren unterschiedliche Sensorarten umfassen (z. B. mindestens einen Lidarsensor, mindestens einen Radarsensor und/oder mindestens eine Kamera).

Gemäß einem zweiten Aspekt wird ein System zur Validierung einer Kalibrierung (und optional zur Kalibrierung) mehrerer Umgebungssensoren eines Fahrzeugs bereitgestellt. Das System ist ausgebildet, ein Verfahren nach einem der vorhergehenden Ansprüche auszuführen. Das System umfasst die Referenzumgebung (z. B. umfassend das Referenzobjekt), das Fahrzeug und die Rechnereinrichtung.

Bevorzugt handelt es sich dabei um ein Fahrzeug um ein Kraftfahrzeug, vorzugsweise Nutzfahrzeug. Mit anderen Worten kann es sich um ein Kraftfahrzeug handeln, das zweckmäßig durch seine Bauart und Einrichtung insbesondere zur Beförderung von Personen, zum Transport von Gütern oder zum Ziehen von Anhängerfahrzeugen ausgelegt ist. Beispielsweise kann das Nutzfahrzeug z. B. ein Lastkraftwagen sein.

Es ist aber auch denkbar, dass es sich bei dem Fahrzeug um ein noch im Herstellungsprozess befindliches und/oder noch nicht vollständig montiertes Fahrzeug (z. B. um einen Fahrzeugrohbau) handelt.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Systems zur Validierung einer Kalibrierung mehrerer Umgebungssensoren eines Fahrzeugs gemäß einer Ausführungsform;
- Figur 2: ein schematisches Ablaufdiagram eines Verfahrens zur Validierung einer Kalibrierung mehrerer Umgebungssensoren eines Fahrzeugs gemäß einer Ausführungsform;
- Figur 3: ein schematisches Blockdiagramm zur weiteren Verdeutlichung der Verfahrensschritte des Verfahrens aus Figur 3; und
- Figur 4: exemplarische Illustrationen von Datensätzen nach verschiedenen Verfahrensschritten.

Die in den Figuren gezeigten Ausführungsbeispiele stimmen zumindest teilweise überein, so dass ähnliche oder identische Teile mit den gleichen Bezugszeichen versehen sind und zu deren Erläuterung auch auf die Beschreibung der anderen Ausführungsbeispiele bzw. Figuren verwiesen wird, um Wiederholungen zu vermeiden.

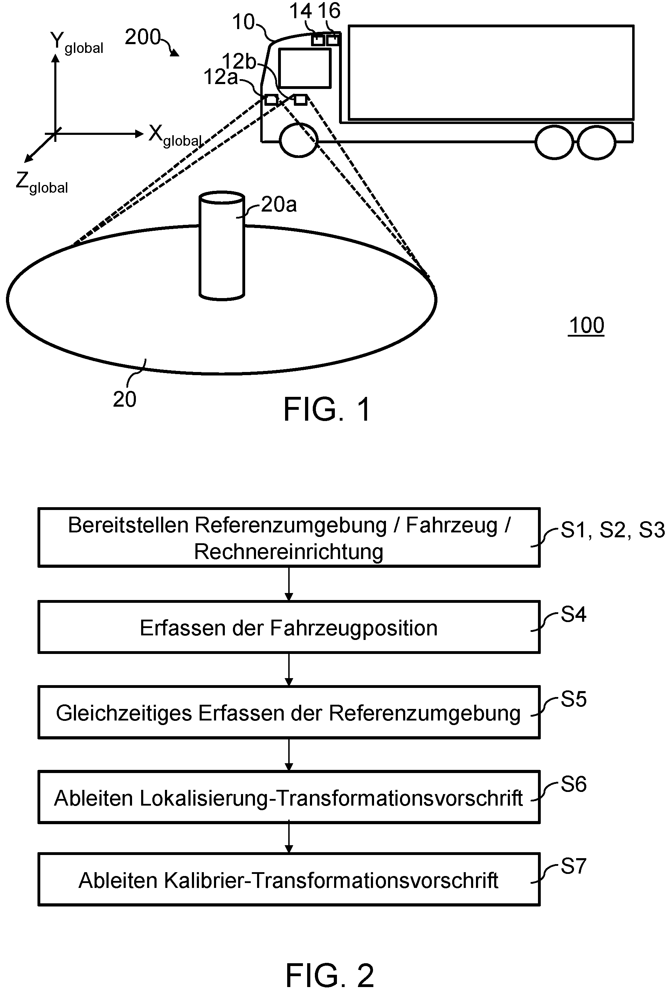

Figur 1 zeigt eine schematische Darstellung eines Systems 200 zur Validierung einer Kalibrierung mehrerer Umgebungssensoren 12a-b eines Fahrzeugs 10.

Exemplarisch ist das Fahrzeug im vorliegenden Ausführungsbeispiel ein Nutzfahrzeug
Das System 200 umfasst ein Fahrzeug 10, eine Referenzumgebung 20 und eine Rechnereinrichtung 16.

Das Fahrzeug 10 umfasst mehrere Umgebungssensoren 12a-b und eine Lokalisierungseinrichtung 14 zum Erfassen einer Fahrzeugposition.

In Figur 1 sind - lediglich exemplarisch - zwei Umgebungssensoren 12a-b gezeigt, wobei auch weitere Umgebungssensoren vorgesehen sein können.

Die Referenzumgebung 20 kann bevorzugt ein Referenzobjekt 20a umfassen und/oder aus dem Referenzobjekt 20a bestehen. Die Referenzumgebung 20 (z. B. das Referenzobjekt 20a) kann Abschnitte (z. B. planare Abschnitte) aufweisen, die in drei unterschiedliche (z. B: kartesische) Raumrichtungen orientiert sind.

In Figur 1 ist die Rechnereinrichtung 16 - lediglich exemplarisch - als von dem Fahrzeug 10 umfasst dargestellt, wobei in (hier nicht dargestellten) Ausführungsformen ebenso denkbar ist, dass die Rechnereinrichtung 16 nicht Teil des Fahrzeugs 10 (z. B. ein stationärer Computer) ist.

Die Umgebungssensoren 12a-b können in Signalverbindung mit der Rechnereinrichtung 16 stehen. Darüber hinaus kann die Lokalisierungseinrichtung 14 in Signalverbindung mit der Rechnereinrichtung 16 stehen.

Die Umgebung kann ein globales Koordinatensystem X_{global}, Y_{global}, Z_{global} aufweisen. Das Fahrzeug 10 kann ein Fahrzeug-Koordinatensystem aufweisen. Jeder der mehreren Umgebungssensoren 12a-b kann jeweils ein eigenes Sensor-Koordinatensystem aufweisen.

Das System 200 ist ausgebildet, ein Verfahren zur Validierung einer Kalibrierung mehrerer Umgebungssensoren 12a-b eines Fahrzeugs 10 auszuführen.

Gemäß dem in Figur 2 schematisch gezeigten Verfahren zur Validierung einer Kalibrierung der mehreren Umgebungssensoren des Fahrzeugs 10 wird zunächst die Referenzumgebung 20 (z. B. umfassend das Referenzobjekt 20a) in der zumindest abschnittsweise mittels der mehreren Umgebungssensoren 12a-b erfassbaren Umgebung 100 bereitgestellt.

Ferner wird das Fahrzeug 10 bereitgestellt, wobei das Fahrzeug 10 die mehreren Umgebungssensoren 12a-b und die Lokalisierungseinrichtung 14 zum Erfassen einer Fahrzeugposition aufweist. Beispielsweise kann das Fahrzeug 10 dazu in die Umgebung 100 einfahren.

Ferner wird die Rechnereinrichtung 16 bereitgestellt, wobei auf der Rechnereinrichtung 16 ein Referenzumgebung-Datensatz (z. B. eine Referenzumgebung-Punktewolke) gespeichert ist, der die Referenzumgebung 20 (z. B. das Referenzobjekt 20a) charakterisiert.

Denkbar ist, dass der in der Rechnereinrichtung 16 bereitgestellte Referenzumgebung-Datensatz eine Genauigkeit (z. B. eine Richtigkeit und/oder eine Präzision) aufweist, die mindestens so hoch ist wie (und bevorzugt höher ist als) eine Rohdatensatz-Messgenauigkeit (z. B. eine Rohdatensatz-Richtigkeit und/oder eine Rohdatensatz-Präzision) jedes Sensor-Rohdatensatzes der mittels der mehreren Umgebungssensoren 12a-b erfassten Sensor-Rohdatensätze.

Der in der Rechnereinrichtung 16 bereitgestellte Referenzumgebung-Datensatz kann vorbekannt sein und/oder vorgespeichert sein und/oder an die Rechnereinrichtung 16 übermittelt werden und/oder nicht mittels der mehreren Umgebungssensoren 12a-b erfasst worden sein.

Denkbar ist aber auch, dass der Referenzumgebung-Datensatz messtechnisch erstellt ist, vorzugsweise mittels Lidar-Sensorik, Photogrammetrie und/oder projektiven Verfahren und/oder eine analytische (z. B. formelmäßige) Beschreibung (z. B. eine Beschreibung als Menge mathematischer Ebenen) der Referenzumgebung 20 umfasst.

Darüber hinaus ist denkbar, dass eine Menge von einer Implementierungen eines iterative-closest-point-Algorithmus intern ebenfalls als beschreibendes Kriterium ("Point to plane Distance" o.Ä.) genutzt wird und aus der gegebenen Punktwolke errechnet wird.

Die Fahrzeugposition wird mittels der Lokalisierungseinrichtung 14 erfasst. Optional kann die Fahrzeugposition auf das globales Koordinatensystem X_{global}, Y_{global}, Z_{global} der Umgebung 100 bezogen sein.

Darüber hinaus wird die Referenzumgebung 20 (z. B. das Referenzobjekt 20a) mittels der mehreren Umgebungssensoren 12a-b gleichzeitig (z. B. zum identischen Zeitpunkt und/oder simultan und/oder zeitgleich) erfasst. Dazu kann die Rechnereinrichtung 16 z. B. ausgebildet sein, die Umgebungssensoren 12a-b derart anzusteuern, dass die Referenzumgebung 20 (z. B. das Referenzobjekt 20a) gleichzeitig erfasst wird.

Es werden (z. B. anhand des jeweils mittels der Umgebungssensoren 12a-b gleichzeitig erfassten Referenzumgebung 20 und optional des Referenzobjekts 20a) Sensor-Rohdatensätze erstellt, die die Referenzumgebung 20 (z. B. das Referenzobjekt 20a) charakterisieren. Optional sind die Sensor-Rohdatensätze auf das Sensor-Koordinatensystem des jeweiligen Umgebungssensors 12a-b bezogen.

Das Erfassen der Referenzumgebung 20 (z. B. des Referenzobjekts 20a mittels der mehreren Umgebungssensoren 12a-b) kann in einem Fahrzeugstillstand oder während einer Fahrzeugbewegung durchgeführt werden.

Darüber hinaus kann das gleichzeitige Erfassen der Referenzumgebung (z. B. des Referenzobjekts 20a) umfassen, dass die Referenzumgebung (z. B. das Referenzobjekt 20a) mittels der mehreren Umgebungssensoren 12a-b zu einem identischen und/oder selben und/oder einzigen Zeitpunkt erfasst (z. B aufgenommen) wird.

Basierend auf der erfassten Fahrzeugposition, dem Referenzumgebung-Datensatz und den Sensor-Rohdatensätzen wird mittels der Rechnereinrichtung 16 eine Lokalisierungs-Transformationsvorschrift abgeleitet.

Basierend auf dem Referenzumgebung-Datensatz, den Sensor-Rohdatensätzen und der Lokalisierungs- Transformationsvorschrift wird mittels der Rechnereinrichtung 16 eine Kalibrier-Transformationsvorschrift (z. B. einer Kalibrier-Transformationsmatrix) abgeleitet.

Bevorzugt ist die Lokalisierungs-Transformationsvorschrift eine Lokalisierung-Transformationsmatrix. Optional ist die Kalibrier-Transformationsvorschrift ein Kalibrier-Transformationsmatrix. Es ist aber auch denkbar, dass die Lokalisierungs-Transformationsvorschrift und/oder die Kalibrier-Transformationsvorschrift jeweils ein Parameter und/oder ein Zahlenwert ist.

Es ist denkbar, dass die Lokalisierungs-Transformationsvorschrift eine Transformation aus einem globalen Koordinatensystem in ein Fahrzeug-Koordinatensystem angeben und/oder die Kalibrier-Transformationsvorschrift eine Transformation aus einem jeweiligen Sensor-Koordinatensystem in ein Fahrzeug-Koordinatensystem angeben.

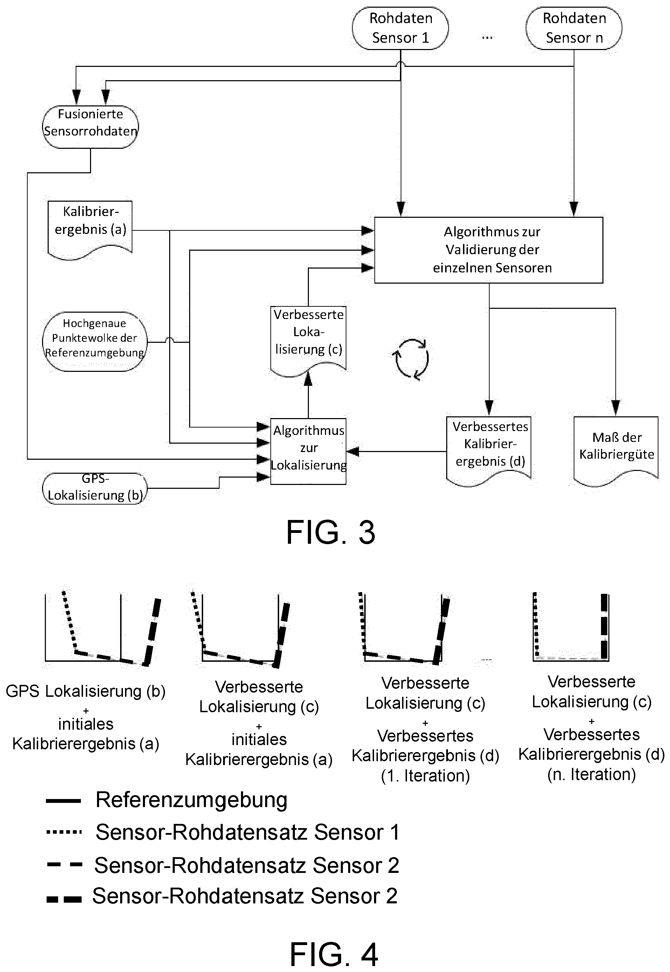

Figur 2 zeigt ein schematisches Blockdiagramm zur weiteren Verdeutlichung der Verfahrensschritte des Verfahrens aus Figur 3.

Die Sensor-Rohdatensätze (z. B. Rohdaten Sensor 1 bis Sensor n) können innerhalb des Schritts des Ableitens einer Lokalisierungs-Transformationsvorschrift mittels der Rechnereinrichtung 16 zu einem fusionierten Sensor-Rohdatensatz zusammengefasst werden.

Basierend auf der erfassten Fahrzeugposition (z. B. GPS-Lokalisierung b), dem Referenzumgebung-Datensatz (z. B. Hochgenaue Punktewolke der Referenzumgebung), den (z. B. fusionierten) Sensor-Rohdatensätzen wird eine Lokalisierungs-Transformationsvorschrift (z. B. verbesserte Lokalisierung a) abgeleitet (z. B. mittels eines iterative-closest-point-Algorithmus und/oder mittels maschinellen Lernens).

Optional kann die Rechnereinrichtung 16 den Referenzumgebung-Datensatz dabei aus dem globalen Koordinatensystem in ein Fahrzeug-Koordinatensystem transformieren.

Optional kann der Schritt des Ableitens der Lokalisierungs-Transformationsvorschrift ein Angleichen (z. B. Fusionieren) des fusionierten Sensor-Rohdatensatzes und des Referenzumgebung-Datensatzes zu einem angeglichenen Datensatz mittels der Rechnereinrichtung 16 umfassen, wobei die Rechnereinrichtung 16 den fusionierten Sensor-Rohdatensatz und den Referenzumgebung-Datensatz zum Kompensieren von Lokalisierungsfehlern des Fahrzeugs 10 (und z. B. dadurch bedingt: der mehreren Umgebungssensoren 12a-b) einander anpasst (z. B. mittels eines iterative-closest-point-Algorithmus und/oder mittels maschinellen Lernens).

Basierend auf dem Referenzumgebung-Datensatz, den Sensor-Rohdatensätzen und der Lokalisierungs- Transformationsvorschrift wird mittels der Rechnereinrichtung 16 eine Kalibrier-Transformationsvorschrift (z. B. das verbesserte Kalibrierergebnis d) abgeleitet. Wie in Figur 3 exemplarisch dargestellt, kann z. B. das verbesserte Lokalisierungsergebnis c, das initiale Kalibrierergebnis a, die hochgenaue Punktewolke der Referenzumgebung sowie die Rohdaten Sensor 1 bis Sensor n mithilfe eines Algorithmus verarbeitet werden.

Das Ergebnis kann eine vollständige Transformationsmatrix und/oder ein numerischer Wert sein, der als Summe der verbleibenden Restfehler ein Kalibriergüte-Maß (z. B. ein Maß für die Güte der ursprünglichen Kalibrierung) darstellt.

Optional kann die Rechnereinrichtung 16 die Sensor-Rohdatensätze aus einem jeweiligen Sensor-Koordinatensystem in ein Fahrzeug-Koordinatensystem transformieren.

Darüber hinaus kann der Schritt des Ableitens der Kalibrier-Transformationsvorschrift ein Transformieren des Referenzumgebung-Datensatzes mittels der Lokalisierungs-Transformationsvorschrift umfassen. Optional kann die Rechnereinrichtung 16 den Referenzumgebung-Datensatz aus dem globalen Koordinatensystem X_{global}, Y_{global}, Z_{global} in ein Fahrzeug-Koordinatensystem transformieren.

Bevorzugt führt die Rechnereinrichtung 16 die Schritte des Ableitens des Lokalisierungs-Transformationsvorschrift und des Ableitens der Kalibrier-Transformationsvorschrift (und Optional des Ableitens des Kalibriergüte-Maßes und/oder des Kalibrierens der mehreren Umgebungssensoren 12a-b) iterativ durch (z. B. solange bis das Kalibriergüte-Maß innerhalb des vorbestimmten Bereichs liegt). Beispielsweise werden der Algorithmus zum Ableiten einer verbesserten Lokalisierung c und der Algorithmus zum Ableiten eines verbesserten Kalibrierergebnisses d also schleifenartig durchlaufen.

Dazu ist z. B. denkbar, dass die Kalibrier-Transformationsvorschrift (z. B. das verbesserte Kalibrierergebnis d) wieder zum Schritt des Ableitens der Lokalisierungs-Transformationsvorschrift zurückgeführt wird. Dann kann z. B. basierend auf der zurückgeführten Kalibrier-Transformationsvorschrift (z. B. dem verbesserten Kalibrierergebnis d), der erfassten Fahrzeugposition (z. B. GPS-Lokalisierung b), dem Referenzumgebung-Datensatz (z. B. hochgenaue Punktewolke der Referenzumgebung), den (z. B. fusionierten) Sensor-Rohdatensätzen eine Lokalisierungs-Transformationsvorschrift (z. B. verbesserte Lokalisierung a) abgeleitet werden (z. B. mittels eines iterative-closest-point-Algorithmus und/oder mittels maschinellen Lernens).

Wie in Figur 3 exemplarisch dargestellt kann das Verfahren ein Bereitstellen einer initialen Kalibrier-Transformationsvorschrift (z. B. das Kalibrierergebnis a) umfassen. Die initiale Kalibriervorschrift kann z. B. eine bereits vorhandene Kalibriervorschrift umfassen. Es ist aber auch denkbar, dass die initiale Kalibriervorschrift eine Kalibriervorschrift umfasst, die beim n-ten iterativen Durchlauf der Schritte des Ableitens des Lokalisierungs-Transformationsvorschrift und des Ableitens der Kalibrier-Transformationsvorschrift wie hierin offenbart, erhalten wurde.

Die initiale Kalibrier-Transformationsvorschrift kann eine Transformation aus einem jeweiligen Sensor-Koordinatensystem in ein Fahrzeug-Koordinatensystem und/oder in ein gemeinsames Koordinatensystem der Umgebungssensoren 12a-b angeben, wobei das Ableiten der Lokalisierungs- Transformationsvorschrift umfasst, dass die Rechnereinrichtung 16 die Sensor-Rohdatensätze mittels der initialen Kalibrier-Transformationsvorschrift in das Fahrzeug-Koordinatensystem und/oder das gemeinsame Koordinatensystem der Umgebungssensoren 12a-b transformiert.

Darüber hinaus kann das Verfahren ein Ableiten eines Kalibriergüte-Maßes mittels der Rechnereinrichtung 16 basierend auf der Kalibrier-Transformationsvorschrift aufweisen (z. B. mittels eines root-mean-square-Algorithmus und/oder mittels maschinellen Lernens).

Optional können die mehreren Umgebungssensoren 12a-b (z. B. von extrinsischen Parametern der Umgebungssensoren 12a-b) mittels der Rechnereinrichtung 16 kalibriert werden (z. B. wenn das Kalibriergüte-Maß außerhalb eines vorbestimmten Bereichs liegt).

Figur 4 zeigt Illustrationen von rein exemplarisch visualisierten Datensätzen nach verschiedenen Verfahrensschritten.

Mit einer dünnen durchgezogenen Linie ist die Geometrie der tatsächlichen Referenzumgebung illustriert. Mit fein gepunkteten Linien ist dabei ein Sensor-Rohdatensatz eines ersten Umgebungssensors 12a dargestellt. Eine grob gestrichelte Linie steht für einen Sensor-Rohdatensatz eines zweiten Umgebungssensors 12b. eine fett und grob gestrichelte Linie steht für einen Sensorrohdatensatz eines optionalen dritten Umgebungssensors.

In Figur 4, links außen, ist eine Gegenüberstellung der Geometrie der Referenzumgebung mit den Sensor-Rohdatensätzen ersichtlich, die basierend auf der erfassten Fahrzeugposition (z. B. GPS-Lokalisierung b) und einer initialen Kalibrier-Transformationsvorschrift (z. B. dem initialen Kalibrierergebnis a) gewonnen wurde. Es zeigt sich - hier lediglich exemplarisch - dass die Sensor-Rohdatensätze in Horizontalrichtung versetzt zur tatsächlichen Referenzgeometrie angeordnet sind. Ferner stehen die Sensor-Rohdatensätze schief zueinander und bilden die tatsächlich - hier exemplarisch - rechtwinklige Referenzgeometrie somit nur ungenügend ab. Es ist eine vergleichsweise niedrige Genauigkeit (z. B. niedrige Präzision und niedrige Richtigkeit) der Sensor-Rohdatensätze ersichtlich.

Figur 4, Mitte links, zeigt eine Gegenüberstellung der Geometrie der Referenzumgebung mit den Sensor-Rohdatensätzen unter Anwendung der Lokalisierungs-Transformationsvorschrift (z. B. die verbesserte Lokalisierung c) und der initialen Kalibrier-Transformationsvorschrift (z. B. das initiale Kalibrierergebnis a). Es zeigt sich, dass eine bessere Überdeckung zur tatsächlichen Geometrie der Referenzumgebung erreicht wird. Allerdings stehen die Sensor-Rohdatensätze weiter schief zueinander und bilden die tatsächlich - hier exemplarisch - rechtwinklige Referenzgeometrie somit nur ungenügend ab. Damit ist eine im Vergleich Figur 4, links außen, erhöhte Genauigkeit (z. B. erhöhte Präzision bei weiterhin niedriger Richtigkeit) der Sensor-Rohdatensätze ersichtlich.

Figur 4, Mitte rechts, zeigt eine Gegenüberstellung der Geometrie der Referenzumgebung mit den Sensor-Rohdatensätzen unter Anwendung der Lokalisierungs-Transformationsvorschrift (z. B. die verbesserte Lokalisierung c) und der Kalibrier-Transformationsvorschrift (z. B. das verbesserte Kalibrierergebnis d) nach dem ersten iterativen Durchlauf des Verfahrens wie hierin offenbart. Die Sensor-Rohdatensätze stehen weniger schief zueinander. Damit ist eine im Vergleich Figur 4, Mitte links, weiter erhöhte Genauigkeit (z. B. erhöhte Präzision bei erhöhter Richtigkeit) der Sensor-Rohdatensätze ersichtlich. Die tatsächliche Referenzgeometrie wird nunmehr hinreichend genau abgebildet.

Figur 4, rechts außen, zeigt eine Gegenüberstellung der Geometrie der Referenzumgebung mit den Sensor-Rohdatensätzen unter Anwendung der Lokalisierungs-Transformationsvorschrift (z. B. die verbesserte Lokalisierung c) und der Kalibrier-Transformationsvorschrift (z. B. das verbesserte Kalibrierergebnis d) nach dem n-ten iterativen Durchlauf des Verfahrens wie hierin offenbart. Damit ist eine im Vergleich Figur 4, Mitte rechts, weiter erhöhte Genauigkeit (z. B. erhöhte Präzision bei erhöhter Richtigkeit) der Sensor-Rohdatensätze ersichtlich. Die tatsächliche Referenzgeometrie wird nunmehr annähernd identisch abgebildet.

### Bezugszeichenliste

- 10: Fahrzeug
- 12a-b: Umgebungssensoren
- 14: Lokalisierungseinrichtung
- 16: Rechnereinrichtung
- 20: Referenzumgebung
- 20a: Referenzobjekt

- 100: Umgebung
- 200: System

## Patentansprüche

1. Verfahren zur Validierung einer Kalibrierung mehrerer Umgebungssensoren (12a-b) eines Fahrzeugs (10), umfassend:
Bereitstellen einer Referenzumgebung (20), vorzugsweise umfassend ein Referenzobjekt (20a), in einer zumindest abschnittsweise mittels der mehreren Umgebungssensoren (12a-b) erfassbaren Umgebung (100);
Bereitstellen des Fahrzeugs (10), wobei das Fahrzeug (10) die mehreren Umgebungssensoren (12a-b) und eine Lokalisierungseinrichtung (14) zum Erfassen einer Fahrzeugposition aufweist;
Bereitstellen einer Rechnereinrichtung (16), wobei auf der Rechnereinrichtung (16) ein Referenzumgebung-Datensatz, vorzugsweise eine Referenzumgebung-Punktewolke, gespeichert ist, der die Referenzumgebung (20) charakterisiert;
Erfassen der Fahrzeugposition mittels der Lokalisierungseinrichtung (14), vorzugsweise wobei die Fahrzeugposition auf ein globales Koordinatensystem der Umgebung (100) bezogen ist;
Gleichzeitiges Erfassen der Referenzumgebung (20) mittels der mehreren Umgebungssensoren (12a-b), wobei Sensor-Rohdatensätze, die die Referenzumgebung (20) charakterisieren, erstellt werden, vorzugsweise die auf ein Sensor-Koordinatensystem des jeweiligen Umgebungssensors (12a-b) bezogen sind;
Ableiten einer Lokalisierungs-Transformationsvorschrift, vorzugsweise einer Lokalisierung-Transformationsmatrix, mittels der Rechnereinrichtung (16), basierend auf der erfassten Fahrzeugposition, dem Referenzumgebung-Datensatz und den Sensor-Rohdatensätzen; und
Ableiten einer Kalibrier-Transformationsvorschrift, vorzugsweise einer Kalibrier-Transformationsmatrix, mittels der Rechnereinrichtung (16), basierend auf dem Referenzumgebung-Datensatz, den Sensor-Rohdatensätzen und der Lokalisierungs-Transformationsvorschrift.

2. Verfahren nach Anspruch 1, wobei der Schritt des Ableitens einer Lokalisierungs-Transformationsvorschrift umfasst:
Fusionieren der Sensor-Rohdatensätze zu einem fusionierten Sensor-Rohdatensatz mittels der Rechnereinrichtung (16), wobei die Rechnereinrichtung (16) die Sensor-Rohdatensätze zu einem fusionierten Sensor-Rohdatensatz zusammenfasst.

3. Verfahren nach Anspruch 2, wobei der Schritt des Ableitens der Lokalisierungs-Transformationsvorschrift ferner umfasst:
Transformieren des Referenzumgebung-Datensatzes mittels der Rechnereinrichtung (16), vorzugsweise wobei die Rechnereinrichtung (16) den Referenzumgebung-Datensatz aus dem globalen Koordinatensystem in ein Fahrzeug-Koordinatensystem transformiert; und/oder
Angleichen des fusionierten Sensor-Rohdatensatzes und des Referenzumgebung-Datensatzes zu einem angeglichenen Datensatz mittels der Rechnereinrichtung (16), wobei die Rechnereinrichtung (16) den fusionierten Sensor-Rohdatensatz und den Referenzumgebung-Datensatz zum Kompensieren von Lokalisierungsfehlern einander anpasst, vorzugsweise mittels eines iterative-closest-point-Algorithmus und/oder mittels maschinellen Lernens.

4. Verfahren nach einem der vorhergehenden Ansprüche, wobei der Schritt des Ableitens der Kalibrier-Transformationsvorschrift umfasst:
Transformieren der Sensor-Rohdatensätze mittels der Lokalisierungs-Transformationsvorschrift, vorzugsweise wobei die Rechnereinrichtung (16) die Sensor-Rohdatensätze aus einem jeweiligen Sensor-Koordinatensystem in ein Fahrzeug-Koordinatensystem transformiert; und/
Transformieren des Referenzumgebung-Datensatzes mittels der Lokalisierungs-Transformationsvorschrift, vorzugsweise wobei die Rechnereinrichtung (16) den Referenzumgebung-Datensatz aus dem globalen Koordinatensystem in ein Fahrzeug-Koordinatensystem transformiert.

5. Verfahren nach einem der vorhergehenden Ansprüche, aufweisend:
Bereitstellen einer initialen Kalibrier-Transformationsvorschrift, die eine Transformation aus einem jeweiligen Sensor-Koordinatensystem in ein Fahrzeug-Koordinatensystem und/oder ein gemeinsames Koordinatensystem der Umgebungssensoren (12a-b) angibt, wobei das Ableiten der Lokalisierungs-Transformationsvorschrift umfasst, dass die Rechnereinrichtung (16) die Sensor-Rohdatensätze mittels der initialen Kalibrier-Transformationsvorschrift in das Fahrzeug-Koordinatensystem und/oder ein gemeinsames Koordinatensystem der Umgebungssensoren (12a-b) transformiert.

6. Verfahren nach einem der vorhergehenden Ansprüche, wobei die Lokalisierungs-Transformationsvorschrift eine Transformation aus einem globalen Koordinatensystem in ein Fahrzeug-Koordinatensystem angibt und/oder die Kalibrier-Transformationsvorschrift eine Transformation aus einem jeweiligen Sensor-Koordinatensystem in ein Fahrzeug-Koordinatensystem angibt.

7. Verfahren nach einem der vorhergehenden Ansprüche, aufweisend:
Ableiten eines Kalibriergüte-Maßes mittels der Rechnereinrichtung (16) basierend auf der Kalibrier-Transformationsvorschrift, vorzugsweise mittels eines root-mean-square-Algorithmus und/oder mittels maschinellen Lernens.

8. Verfahren nach einem der vorhergehenden Ansprüche, aufweisend:
Kalibrieren der mehreren Umgebungssensoren (12a-b), vorzugsweise von extrinsischen Parametern der Umgebungssensoren (12a-b), mittels der Rechnereinrichtung (16), vorzugsweise wenn das Kalibriergüte-Maß außerhalb eines vorbestimmten Bereichs liegt.

9. Verfahren nach einem der vorhergehenden Ansprüche, wobei die Rechnereinrichtung (16) die Schritte des Ableitens des Lokalisierungs-Transformationsvorschrift und des Ableitens der Kalibrier-Transformationsvorschrift, und vorzugsweise des Ableitens des Kalibriergüte-Maßes und/oder des Kalibrierens der mehreren Umgebungssensoren (12a-b), iterativ durchführt, vorzugsweise solange bis das Kalibriergüte-Maß innerhalb des vorbestimmten Bereichs liegt.

10. Verfahren nach einem der vorhergehenden Ansprüche, wobei der in der Rechnereinrichtung (16) bereitgestellte Referenzumgebung-Datensatz eine Genauigkeit, vorzugsweise eine Richtigkeit und/oder eine Präzision, aufweist, die mindestens so hoch ist wie, vorzugsweise höher ist als, eine Rohdatensatz-Messgenauigkeit, vorzugsweise eine Rohdatensatz-Richtigkeit und/oder eine Rohdatensatz-Präzision, jedes Sensor-Rohdatensatzes der mittels der mehreren Umgebungssensoren (12a-b) erfassten Sensor-Rohdatensätze.

11. Verfahren nach einem der vorhergehenden Ansprüche, wobei der in der Rechnereinrichtung (16) bereitgestellte Referenzumgebung-Datensatz:
vorbekannt ist und/oder vorgespeichert ist und/oder an die Rechnereinrichtung (16) übermittelt wird und/oder nicht mittels der mehreren Umgebungssensoren (12a-b) erfasst wird;
messtechnisch erstellt ist, vorzugsweise mittels Lidar-Sensorik, Photogrammetrie und/oder projektiven Verfahren; und/oder
eine analytische, vorzugsweise formelmäßige, Beschreibung der Referenzumgebung (20), vorzugsweise des Referenzobjekts (20a), umfasst.

12. Verfahren nach einem der vorhergehenden Ansprüche, wobei das gleichzeitige Erfassen der Referenzumgebung umfasst, dass die Referenzumgebung mittels der mehreren Umgebungssensoren (12a-b)
zu einem identischen und/oder selben und/oder einzigen Zeitpunkt erfasst wird; und/oder
zu mehreren Zeitpunkten erfasst werden, vorzugsweise wobei die Sensor-Rohdatensätze aller Umgebungssensoren, optional mittels einer Odometrieschätzung, einander angeglichen werden.

13. Verfahren nach einem der vorhergehenden Ansprüche, wobei:
das Bereitstellen des Fahrzeugs (10) ein Einfahren des Fahrzeugs (10) in die Umgebung (100) umfasst;
das Erfassen der Referenzumgebung (20) mittels der mehreren Umgebungssensoren (12a-b) in einem Fahrzeugstillstand oder während einer Fahrzeugbewegung durchgeführt wird;
die Referenzumgebung (20), vorzugsweise planare, Abschnitte aufweist, die in drei unterschiedliche Raumrichtungen orientiert sind; und/oder
die mehreren Umgebungssensoren (12a-b) Lidar-Sensoren umfassen.

14. System (200) zur Validierung einer Kalibrierung mehrerer Umgebungssensoren (12a-b) eines Fahrzeugs (10), wobei das System (200) ausgebildet ist, ein Verfahren nach einem der vorhergehenden Ansprüche auszuführen, wobei das System (200) das Fahrzeug (10) und die Rechnereinrichtung (16), vorzugsweise und die Referenzumgebung (20), umfasst.
